**Europäisches Patentamt**

**European Patent Office**

**Office européen des brevets**

(19)

(11) Numéro de publication : **0 407 293 B1**

(12) # FASCICULE DE BREVET EUROPEEN

(45) Date de publication du fascicule du brevet :
06.04.94 Bulletin 94/14

(51) Int. Cl.⁵ : **F16J 15/10**

(21) Numéro de dépôt : **90401920.5**

(22) Date de dépôt : **03.07.90**

(54) **Système d'étanchement statique entre deux carters à faces planes.**

(30) Priorité : **06.07.89 FR 8909124**

(43) Date de publication de la demande :
**09.01.91 Bulletin 91/02**

(45) Mention de la délivrance du brevet :
**06.04.94 Bulletin 94/14**

(84) Etats contractants désignés :
**DE ES FR GB IT SE**

(56) Documents cités :
**FR-A- 2 069 668**
**GB-A- 1 045 110**
**US-A- 3 913 927**
**SOVIET INVENTIONS ILLUSTRATED**

(73) Titulaire : **JAEGER, Société Anonyme Française**
**2 Rue Baudin**
**F-92303 Levallois Perret Cédex (FR)**

(72) Inventeur : **Baglin,Richard**
**6 rue du Bois Saint Père**
**F-92500 Rueil-Malmaison (FR)**

(74) Mandataire : **Bloch, Gérard et al**
**2, square de l'Avenue du Bois**
**F-75116 Paris (FR)**

Description

L'étanchement entre deux carters à face plane est le plus souvent réalisé par l'utilisation conjointe d'un joint plat en matière synthétique semi-plastique (joint découpé ou colle à durcissement lent) et d'un bridage, ou moyens de fixation, constitué en général d'un certain nombre de vis (ou goujons et écrous). Dans le cas général, auquel on s'intéresse ici, le joint en matériau élastomère, de forme torique par exemple, est logé dans une gorge ménagée dans la face plane d'un des carters, en contact avec la face plane de l'autre carter. Les sections constantes de la gorge et du joint sont bien entendu déterminées de manière que, après serrage des moyens de fixation, une partie du joint reste en saillie par rapport à la face du carter dans laquelle est ménagée la gorge et demeure en contact avec la face du carter opposé.

Ce système donne généralement satisfaction lorsque les carters sont métalliques, notamment dans le cas des carters de pompes à eau de refroidissement de moteurs automobiles. Toutefois, lorsque les températures de fonctionnement sont augmentées, cette solution devient précaire du fait des dilatations relatives et du moindre serrage dans les parties situées entre les vis de fixation. Il arrive alors fréquemment que des fuites apparaissent précisément dans ces parties. Ce défaut est encore accentué lorsque l'un des carters est réalisé en matière plastique, soit thermoplastique, soit thermodurcissable, car les fluages à chaud de ces matériaux sont plus importants que pour les métaux.

Par ailleurs, on sait que, sous contrainte, un élastomère a tendance à se libérer de cette contrainte par fluage, c'est-à-dire par réduction d'épaisseur, celle-ci tendant vers une valeur limite représentant ce qu'on appelle la rémanence. Pour tenir compte de cette diminution, qui est un certain pourcentage de l'épaisseur initiale, il est nécessaire, toutes choses égales par ailleurs, de donner au joint l'épaisseur la plus grande possible pour conserver le serrage maximal. Ce besoin se fait sentir d'autant plus qu'il peut se produire un desserrage, ou baillement, entre les points de fixation.

Mais l'épaisseur du joint est limitée par la disposition même des moyens assurant la fixation des carters l'un à l'autre. Cette disposition qui vise à réduire au maximum les risques de baillement, conduit, au voisinage de ces moyens de fixation, à ne laisser le plus souvent, disponible pour la gorge logeant le joint, qu'un espace, donc qu'une largeur de gorge, assez faible, et par conséquent une épaisseur de joint limitée.

On voit que, pour les raisons indiquées ci-dessus, c'est donc la qualité de l'étanchement lui-même qui est en cause.

Pour remédier en partie à ces inconvénients, les documents SU-A-697 774 et US-A-3 913 927 proposent des joints à section évolutive. Toutefois, avec une telle solution, la maîtrise de la compression du joint y est imparfaite dans la mesure où elle dépend principalement de la déformation des pièces entre lesquelles se trouve le joint.

La présente invention vise à remédier à ces inconvénients et elle prévoit, à cet effet, un système d'étanchement statique entre deux carters à face plane, dans lequel un joint en matière synthétique semi-plastique est logé dans une gorge ménagée dans la face plane d'un des carters et passant au voisinage de points de fixation des carters l'un contre l'autre, le joint ayant une section évolutive en fonction de sa position par rapport aux dits moyens de fixation, caractérisé par le fait que ladite gorge a une section évolutive en fonction de sa position par rapport aux dits moyens de fixation.

Sous leur forme de réalisation préférée, ces sections évoluent progressivement d'une valeur minimale correspondant à l'espace disponible au voisinage des points de fixation à une valeur maximale entre ces points, qui peut être de l'ordre du décuple de la valeur minimale.

Avantageusement, l'évolution dimensionnelle de ladite gorge et dudit joint est telle que le taux de compression linéaire reste constant.

Avantageusement encore, la valeur du taux de compression linéaire est comprise entre 10 et 15%.

La structure du système selon l'invention qui conduit à donner au joint l'épaisseur la plus grande possible en tout point de son pourtour, permet de contrebalancer l'effet de la rémanence dans les zones de baillement des surfaces en contact et donc d'assurer le maintien d'un serrage suffisant et donc d'une étanchéité parfaite.

A titre nullement limitatif, on a représenté au dessin annexé un exemple de réalisation de système d'étanchement selon l'invention, dessin sur lequel :
- la figure 1 est une demi-vue en coupe de deux carters de pompe, limitée à une zone de contact,
- la figure 2 est une vue à plat du joint,
- la figure 3 est une vue en coupe transversale, à plus grande échelle, du carter sur lequel est ménagée la gorge, dans la zone A du joint, d'épaisseur minimale,
- la figure 4 est une vue analogue à la figure 3, dans la zone B du joint, d'épaisseur maximale, et,
- les figures 5a et 5b sont des vues en coupe transversales dans la zone A et la zone B respectivement, des deux carters, de la gorge et du joint, dans un exemple de réalisation.

Dans l'exemple représenté au dessin, le système d'étanchement de l'invention est appliqué au contact des surfaces planes des deux carters 1 et 2 d'une pompe à eau de refroidissement d'un moteur d'automobile.

L'étanchement est réalisé par un joint 3 en caoutchouc ou autre matière élastomère, qui est ici de forme torique. Il est logé dans une gorge 4 ménagée dans la surface du carter 1 de la pompe.

Le serrage des carters l'un contre l'autre est assuré ici par des goujons et écrous 5, 5', 5", 5'".

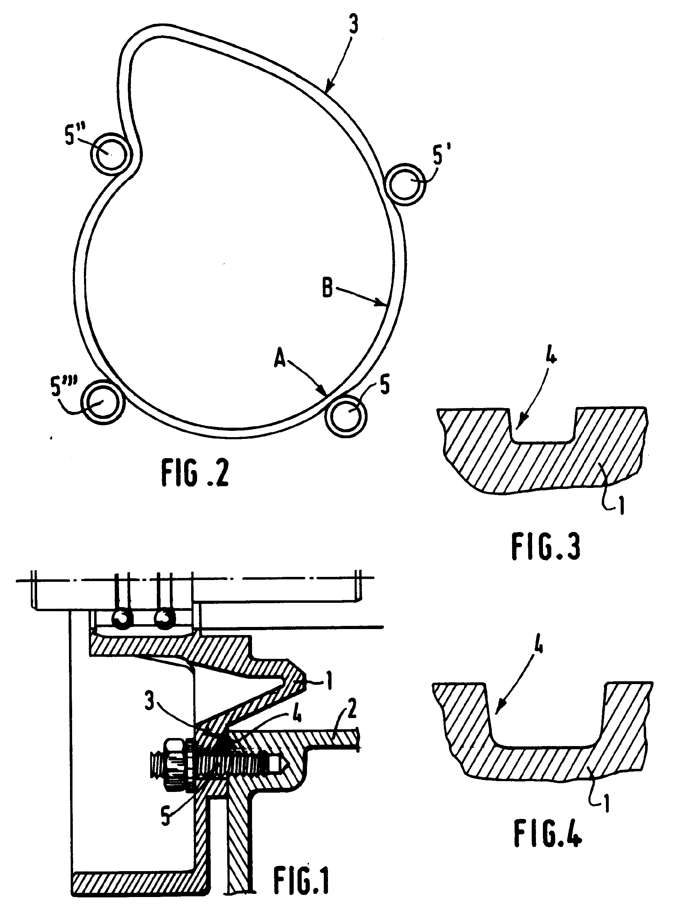

Comme on le voit sur la figure 1, l'espace disponible pour la gorge 4 est très limité au voisinage du goujon 5, en A par exemple, et celle-ci (cf. fig.3) sera de faible largeur, par exemple 1,5 mm et de profondeur 1,2 mm. Le joint 3 aura donc en A l'épaisseur minimale à savoir, dans cet exemple, un diamètre de 1,5 mm.

Par contre, entre les points de fixation, par exemple en B entre les boulons 5 et 5', la gorge 4 pourra avoir une plus grande dimension (fig.4) par exemple 5 mm de largeur et 4,5 mm de profondeur, et le joint sera de diamètre 5 mm.

Le raccordement entre les zones de joint maximale (B) et minimale (A) se fera bien entendu, de façon progressive.

On a supposé jusqu'ici que le joint était torique, mais il pourrait avoir toute autre forme, sans être toutefois trop plat pour ne pas être d'une mise en place trop délicate.

L'évolution dimensionnelle de la gorge et du joint peut s'effectuer dans les deux sens, transversalement et/ou longitudinalement compte tenu de ce que le taux de compression linéaire du joint doit en principe rester constant.

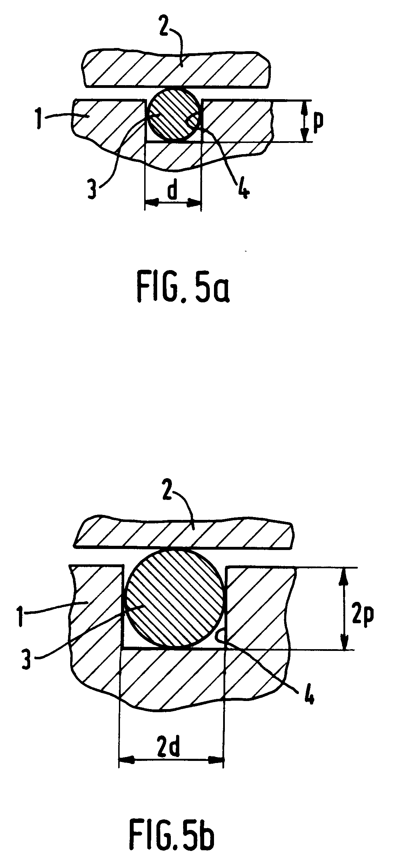

A titre d'exemple les figures 5a et 5b montrent deux sections droites de la gorge 4 et du joint 3 aux points A et B respectivement.

Comme le montre la figure 5a, en A, proche du point de fixation 5, la gorge 4 a ici une section rectangulaire de profondeur p et de largeur d. Le joint 3 est, au point A, de section circulaire de diamètre d, avant serrage. Après serrage du carter 1 contre le carter 2, le taux de compression linéaire relative du joint 3 au point A est :

$$c = (d - p)/p$$

Comme le montre la figure 5b, en B, éloigné des points de fixation 5 et 5', la gorge 3 a une section rectangulaire de profondeur 2p et de largeur 2d, tandis que le joint 3, est, au point B, de section circulaire de diamètre 2d avant serrage. Après serrage, le taux de compression linéaire relative est :

$$(2d - 2p)/2p = (d - p)/p = c$$

La compression linéaire du joint est ainsi maintenue constante tout au long du joint, puisque pour les positions intermédiaires en les points tels que A et B, on peut prévoir un diamètre kd pour le joint 3, ainsi qu'une largeur kd et une profondeur kp pour la gorge 4, ce qui conduit au taux constant :

$$(kd - kp)/kp = (d - p)/p = c.$$

La valeur du taux de compression linéaire relative est avantageusement choisie égale à 10 à 15%.

## Revendications

1. Système d'étanchement statique entre deux carters à face plane, dans lequel un joint (3) en matière synthétique semi-plastique est logé dans une gorge (4) ménagée dans la face plane d'un (1) des carters et passant au voisinage de points de fixation (5) des carters (1,2) l'un contre l'autre, le joint (3) ayant une section évolutive en fonction de sa position par rapport aux dits moyens de fixation (5), caractérisé par le fait que ladite gorge (4) a une section évolutive en fonction de sa position par rapport aux dits moyens de fixation (5).

2. Système d'étanchement selon la revendication 1, dans lequel lesdites sections évoluent progressivement entre une valeur minimale au voisinage (A) des points de fixation (5) et une valeur maximale dans la zone (B) comprise entre les dits points (5,5').

3. Système d'étanchement selon l'une des revendications 1 ou 2, dans lequel l'évolution dimensionnelle de ladite gorge (4) et dudit joint (3) est telle que le taux de compression linéaire reste constant.

4. Système d'étanchement selon la revendication 3, dans lequel la valeur du taux de compression linéaire est comprise entre 10 et 15%.

## Patentansprüche

1. Statisches Dichtungssystem zwischen zwei ebenen Gehäuseflächen, bei dem eine Dichtung (3) aus semi-plastischem Kunststoff in einer Rille (4) angeordnet ist, die in der ebenen Fläche eines (1) der Gehäuse vorgesehen ist und neben den Punkten (5) zur gegenseitigen Befestigung der Gehäuse (1, 2) vorbeiläuft, wobei die Dichtung (3) einen Querschnitt aufweist, der sich in Abhängigkeit von seiner Position in bezug auf die Befestigungsmittel (5) verändert, dadurch gekennzeichnet, daß die Rille (4) einen Querschnitt aufweist, der sich in Abhängigkeit von seiner Position in bezug auf die Befestigungsmittel (5) verändert.

2. Dichtungssystem nach Anspruch 1, bei dem sich die genannten Querschnitte zwischen einem minimalen Wert in der unmittelbaren Umgebung (A) der Befestigungspunkte (5) und einem maximalen Wert in der Zone (B) zwischen diesen Punkten (5, 5') allmählich verändern.

3. Dichtungssystem nach einem der Ansprüche 1 oder 2, bei dem die Querschnittsänderung der Rille (4) und der Dichtung (3) derart ist, daß das lineare Kompressionsverhältnis konstant bleibt.

4. Dichtungssystem nach Anspruch 3, bei dem der Wert des linearen Kompressionsverhältnisses zwischen 10 und 15 % beträgt.

## Claims

1. A static sealing system between two flat-faced casings, in which a semi-plastic synthetic material seal (3) is housed in a groove (4) formed in the flat face of one (1) of the casings and disposed in the vicinity of fixing points (5) at which the casings (1,2) are fixed together, the seal (3) having a variable cross-section as function of its position with respect to said fixing points (5), characterized in that said groove (4) has a variable cross-section as function of its position with respect to said fixing points (5).

2. The sealing system according to claim 1, wherein said cross-sections vary progressively between a minimum value in the vicinity (A) of the fixing points (5) and a maximum value in a zone (B) comprised between said fixing points (5,5').

3. The sealing system according to one of claims 1 and 2, wherein the dimensional variations of said groove (4) and of said seal (3) are such that a linear compression rate remains constant.

4. The sealing system according to claim 3, wherein the value of the linear compression rate is between 10 and 15%

FIG .2

FIG.3

FIG.1

FIG.4

FIG. 5a

FIG.5b